# FASCICULE DE BREVET EUROPEEN

(11) **EP 1 559 946 B1**
(45) Date de publication et mention de la délivrance du brevet: **16.08.2006**
(21) Numéro de dépôt: 05007774.2
(22) Date de dépôt: 10.07.2002
(51) Int. Cl.: F16L 59/02, B26F 1/46

(54) **Poinconnage d'éléments annulaires dans une bande de matériau fibreux**
Stanzen von ringförmigen Elementen ausgehend von einem Band aus Faserstoff
Punching of annular elements from a band of fibrous material

(30) Priorité: 17.07.2001 WO PCT/DK01/00498; 31.10.2001 FR 0114106
(43) Date de publication de la demande: 03.08.2005
(62) Demande divisionnaire de: 02764964.9
(73) Titulaire: SAINT-GOBAIN ISOVER, 92400 Courbevoie (FR)
(72) Inventeur: Jessen, Erling, 6100 Haderslev (DK); Jensen, Fleming Lund, 6580 Vamdrup (DK)
(74) Mandataire: Colombier, Christian

(56) Documents cités:
- DE-A- 4 417 110
- US-A- 3 329 051
- US-A- 3 648 555

## Description

L' invention concerne le domaine de l'isolation notamment thermique, voire phonique, de canalisations (comme une tuyauterie) véhiculant ou renfermant un fluide ayant une température différente de celle de son environnement. On cherche notamment à limiter les échanges de chaleur entre la canalisation et son environnement.

L'invention concerne une méthode de production d'éléments, tels que des éléments annulaires (en fait tubulaires), par poinçonnage, le matériau de départ étant une bande non tissée de matériau fibreux (c'est-à-dire de feutre) enduit (généralement par un liant réticulé), tel qu'une laine minérale trempée (au sens d'une trempe thermique), ladite méthode employant un outil de poinçonnage (ou d'estampage) en forme d'au moins un poinçon de perforation qui est monté dans une plaque de presse et qui est pressé à travers la bande non tissée de matériau fibreux enduit puis retiré à nouveau.

On recherche des moyens isolants de canalisations, et ce quel que soit le diamètre, la longueur et le rayon de courbure de celles-ci.

L'isolation thermique des tuyaux transportant des fluides est largement répandu, tant pour protéger les tuyaux du gel que pour prévenir toute perte excessive de calories ou de frigories, et ce notamment pour des raisons d'économie d'énergie.

L'isolation dans l'habitat et le tertiaire, tel que le calorifugeage de tuyaux véhiculant des fluides passant dans des parties non chauffées, se compose généralement de matières synthéthiques expansées ou de laines minérales, en particulier de laine de verre ou de laine de roche. Le calorifugeage est alors réalisé par des éléments cylindriques appelés coquilles (« pipe section » en anglais).

Il est connu d'utiliser des éléments annulaires en laine minérale pour isoler des tuyaux et des coudes de tuyaux, toutes les fibres de la laine minérale étant agencées substantiellement parallèlement les unes aux autres.

En outre, il est connu de produire de tels éléments annulaires (où tubulaires) par découpage par poinçonnage à partir d'une bande non tissée de matériau fibreux enduit en forme de laine minérale trempée, toutes les fibres étant agencées substantiellement dans la direction longitudinale de ladite bande. Le poinçonnage est effectué au moyen de trois outils de poinçonnage qui sont agencés du même côté de ladite bande et qui sont pressés l'un après l'autre dans ladite bande. Tandis qu'un premier outil de poinçonnage est pressé dans la bande non tissée de matériau fibreux enduit, un poinçon de percussion est simultanément abaissé, ledit poinçon de percussion faisant sortir par pressage le premier élément, tel qu'un cylindre de laine minérale, avec pour résultat qu'un trou est formé dans ladite bande. Ensuite, ladite bande est avancée de manière à ce que le trou ci-dessus se trouve en face d'un deuxième poinçon de percussion placé à l'intérieur d'un deuxième outil de poinçonnage. Ce deuxième poinçon de percussion est déplacé dans le trou ci-dessus afin de centrer la bande, après quoi un élément annulaire est découpé par poinçonnage autour dudit trou. Par conséquent, un trou plus grand que ledit trou mentionné en premier est laissé dans la bande. A présent, la bande est à nouveau avancée d'une certaine distance, le trou agrandi étant alors positionné en face d'un troisième poinçon de percussion. Le troisième poinçon de percussion entoure un troisième outil de poinçonnage, et est abaissé dans le trou agrandi, après quoi l'outil de poinçonnage en question est pressé dans la bande. En conséquence, encore un autre élément annulaire est découpé par poinçonnage, ledit élément annulaire présentant un diamètre plus grand que le diamètre de l'élément annulaire produit auparavant. Autrement dit, cette méthode connue résulte en la production de deux types d'éléments annulaires (ou tubulaires) présentant un diamètre différent. Une telle méthode n'est pas totalement satisfaisante, parce qu'elle requiert l'utilisation d'un équipement assez encombrant, et aussi parce que la résistance à la compression des éléments annulaires (ou tubulaires) produits est moins bonne que la résistance à la compression du matériau de départ.

L'invention concerne une méthode de poinçonnage (ou d'estampage) qui, par comparaison aux méthodes de poinçonnage connues, soit beaucoup plus simple et fiable, et qui puisse être mise en oeuvre au moyen d'équipements ne nécessitant que peu d'espace, et qui, en outre, fasse en sorte que la résistance à la compression des éléments découpés par poinçonnage soit substantiellement identique à la résistance à la compression du matériau de départ.

La méthode de poinçonnage selon l'invention est caractérisée en ce que le poinçon de perforation tubulaire utilisé dépasse à travers la plaque de presse et a une longueur qui correspond à 80 à 350 %, de préférence à 200 à 300 % de l'épaisseur de la bande, et en ce que le poinçonnage est effectué contre une contre-plaque de pression éventuellement pourvue de trous, et en ce que le poinçonnage est effectué de telle sorte qu'initialement, un élément qui vient d'être découpé par poinçonnage soit temporairement retenu dans le poinçon de perforation, mais qu'après une avance pas à pas de la bande de matériau fibreux, tel que de la laine minérale, et une pression renouvelée vers l'intérieur du poinçon de perforation tubulaire, ledit élément soit pressé vers l'arrière à travers ledit poinçon de perforation au moyen de l'élément à présent découpé par poinçonnage. De cette manière, on obtient, d'une manière très simple et fiable, qu'une fois que chaque élément a été découpé par poinçonnage et placé dans l'outil de poinçonnage, ledit élément soit ressorti par pressage hors de l'outil de poinçonnage par l'élément de poinçonnage découpé par poinçonnage par l'outil de poinçonnage dans la couche d'usinage suivante. Le poinçon de perforation tubulaire et la plaque de presse associée ne prennent pas beaucoup de place. La résistance à la compression des éléments annulaires n'a pas été réduite de manière significative par comparaison à la résistance à la compression du matériau de départ.

Selon un mode de réalisation de la méthode de poinçonnage selon l'invention, les éléments sont par exemple utilisés pour des gaines d'isolation thermique de tuyaux, et ce mode de réalisation de la méthode est caractérisé en ce que les poinçons de perforation utilisés sont formés par un poinçon de perforation tubulaire de grand diamètre et un poinçon de perforation tubulaire de petit diamètre, lesdits poinçons de perforation tubulaires étant agencés sur leur côté respectif de la bande de laine minérale, et en ce que les poinçons de perforation, individuellement, sont pressés dans la bande et l'un dans l'autre avec pour résultat qu'un élément annulaire formé entre lesdits poinçons de perforation se place comme un bouchon dans le poinçon de perforation tubulaire de grand diamètre, et qu'une fois que les deux poinçons de perforation ont été écartés l'un de l'autre, la bande de laine minérale est avancée d'un pas, et les deux poinçons de perforation tubulaires sont à nouveau, individuellement, pressés dans ladite bande de laine minérale avec pour résultat que l'élément annulaire à présent découpé par poinçonnage presse l'élément annulaire découpé par poinçonnage au cours de l'étape précédente hors du poinçon de perforation tubulaire de grand diamètre, ce dernier élément annulaire étant libéré vers l'arrière depuis ce dernier poinçon de perforation. Ce mode de réalisation s'est avéré particulièrement approprié pour la production d'éléments annulaires.

Un deuxième mode de réalisation de la méthode de poinçonnage selon l'invention est caractérisé en ce que le bouchon de fibres de laine minérale résultant de la pression vers l'intérieur dans la bande au niveau du petit poinçon de perforation tubulaire est aspiré vers l'arrière au moyen d'un dispositif d'aspiration pour ressortir à travers le poinçon de perforation.

Un troisième mode de réalisation de la méthode de poinçonnage selon l'invention est caractérisé en ce que les poinçons de perforation tournent alors qu'ils sont pressés dans la bande avec pour résultat que les éléments découpés par poinçonnage sont pourvus d'une surface particulièrement uniforme.

Un quatrième mode de réalisation de la méthode de poinçonnage selon l'invention est caractérisé en ce que les éléments annulaires expulsés du grand poinçon de perforation tubulaire sont recueillis immédiatement après leur libération, ce qui s'est avéré être la procédure la plus avantageuse lorsque la méthode doit être mise en oeuvre relativement rapidement.

Un cinquième mode de réalisation de la méthode de poinçonnage selon l'invention est caractérisé en ce que le matériau de départ utilisé se compose de fibres tissées de laine de verre, de laine de roche ou de fibres végétales d'une densité de 15 à 80 kg/m³, de préférence de 35 kg/m³, et en ce que la bande a une épaisseur de 4 à 20 cm, de préférence de 5 à 15 cm, en particulier d'approximativement 10 cm. Ce mode de réalisation s'est avéré particulièrement avantageux.

L'invention concerne également un appareil pour mettre en oeuvre la méthode de poinçonnage selon l'invention, ledit appareil comprenant un dispositif pour faire avancer pas à pas une bande de matériau fibreux, telle qu'une bande de laine minérale ou de fibres végétales, lesdites fibres s'étendant dans la direction longitudinale de la bande, ainsi qu'une plaque de presse pourvue d'au moins un poinçon de perforation. Cet appareil est caractérisé en ce que le poinçon de perforation est tubulaire et a une longueur qui correspond à 80 à 500 %, de préférence à 100 à 350 %, en particulier à 200 à 300 % de l'épaisseur de la bande de matériau, et en ce qu'une contre-plaque de pression éventuellement pourvue d'un trou est agencée en face et à une certaine distance de la plaque de presse, et en ce que le poinçon de perforation est monté dans un trou dans ladite plaque de presse de manière à garantir que l'expulsion par pressage de l'élément découpé par poinçonnage puisse s'effectuer vers l'arrière à travers le canal intérieur du poinçon de perforation. Cet appareil s'est avéré être particulièrement approprié pour mettre en oeuvre la méthode de poinçonnage.

Selon l'invention, les poinçons de perforation peuvent comprendre un poinçon de perforation tubulaire de grand diamètre et un poinçon de perforation tubulaire de petit diamètre, lesdits poinçons de perforation étant agencés directement en face l'un de l'autre sur leur côté respectif de la bande de matériau fibreux enduit, de telle sorte que le poinçon de perforation de petit diamètre puisse être pressé contre une deuxième contre-plaque de pression qui est enlevée après que le poinçon de perforation est passé à travers la bande, et le poinçon de perforation de grand diamètre puisse glisser par-dessus le poinçon de perforation de petit diamètre, de préférence substantiellement coaxialement audit poinçon de perforation. Un tel appareil s'est avéré fonctionner de manière particulièrement efficace, et en outre, il ne prend que peu de place.

Selon l'invention, le poinçon de perforation tubulaire de petit diamètre peut être associé à un dispositif d'aspiration avec pour résultat qu'il est particulièrement facile de retirer le bouchon de laine minérale formé à l'intérieur du petit poinçon de perforation tubulaire.

Finalement, le poinçon de perforation tubulaire de petit diamètre peut, selon l'invention, avoir une longueur qui correspond à 80 à 150 %, de préférence à 100 à 120 % de l'épaisseur de la bande. Un tel mode de réalisation du petit poinçon de perforation s'est avéré être particulièrement approprié pour l'utilisation par la méthode de poinçonnage selon l'invention,
la figure 1 est une vue en perspective schématique d'un premier mode de réalisation d'un appareil selon l'invention, un poinçon de perforation étant illustré dans sa position supérieure,
la figure 2 correspond à la figure 1, mais le poinçon de perforation est positionné dans sa position inférieure,
la figure 3 est une vue en perspective schématique d'un deuxième mode de réalisation de l'appareil selon l'invention, ledit appareil étant pourvu de deux poinçons de perforation,
la figure 4 correspond à la figure 3, mais les poinçons de perforation ont été pressés dans la bande,
la figure 5 est une vue en perspective schématique à grande échelle d'un élément découpé par poinçonnage, ledit élément étant pressé vers le haut et l'extérieur à travers un poinçon de perforation par un autre élément qui vient d'être découpé par poinçonnage,
la figure 6 correspond à la figure 5, mais les éléments découpés par poinçonnage comprennent un trou central,
la figure 7 est une vue schématique des trois étapes de la méthode de poinçonnage.

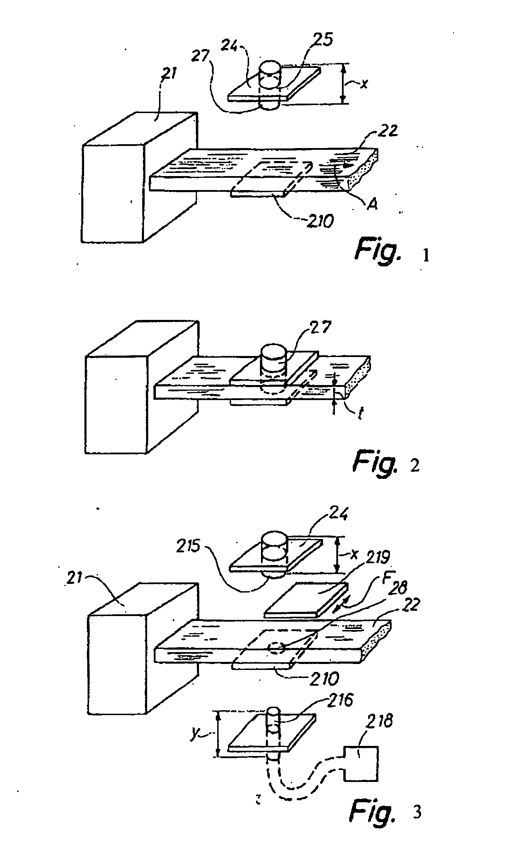

L'appareil illustré dans la figure 1 est utilisé pour mettre en oeuvre la méthode de poinçonnage selon l'invention. La méthode de poinçonnage sera décrite plus en détail ci-dessous. L'appareil comprend un dispositif 21 pour l'avance pas à pas d'une bande 22 de matériau fibreux enduit, tel qu'une laine minérale ou des fibres végétales, les fibres s'étendant dans la direction longitudinale A de la bande. En outre, l'appareil comprend une plaque de presse 24, et un poinçon de perforation 27 est monté dans un trou 25 dans ladite plaque de presse 24. Le poinçon de perforation 27 est tubulaire et a une longueur x qui correspond à 80 à 500 %, de préférence à 100 à 350 %, en particulier à 200 à 300 % de l'épaisseur t de la bande 22. Une contre-plaque de pression 210 éventuellement pourvue d'un trou 28, voir la figure 3, est agencée en face de la plaque de presse 24. Le poinçon de perforation 27 a une longueur telle que lorsque le poinçon de perforation a été pressé dans la bande, l'élément découpé par poinçonnage soit pressé vers l'arrière et l'extérieur à travers le canal intérieur du poinçon de perforation, à savoir lorsque ledit poinçon de perforation est pressé par une ou plusieurs courses successives dans la bande de manière à découper par poinçonnage d'autres éléments.

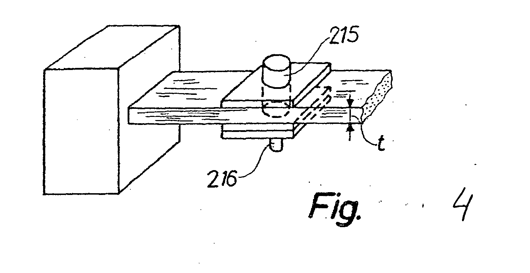

Comme illustré dans la figure 3, les poinçons de perforation peuvent également être formés par un poinçon de perforation tubulaire 215 de grand diamètre et un poinçon de perforation tubulaire 216 de petit diamètre. Ces poinçons de perforation sont agencés directement en face l'un de l'autre à côté de la bande 22. Ainsi, les poinçons de perforation 215 et 216 sont agencés de telle sorte que le poinçon de perforation 216 puisse glisser dans le poinçon de perforation 215 tandis qu'il est pressé dans la bande 22, voir la figure 4, ledit poinçon de perforation 216 glissant de préférence substantiellement coaxialement audit poinçon de perforation 215.

Comme illustré dans la figure 3, le poinçon de perforation 216 peut être associé à un dispositif d'aspiration 218 qui peut recueillir du matériau provenant du bouchon formé dans l'intérieur du poinçon de perforation 216 au cours de la pression vers l'intérieur dudit poinçon de perforation 216 dans la bande 22. Le poinçon de perforation 216 peut avoir une longueur y qui correspond à 80 à 150 %, de préférence à 100 à 120 % de l'épaisseur t de la bande 22. Dans la figure 3, le poinçon de perforation 216 est illustré particulièrement long pour des raisons de clarté.

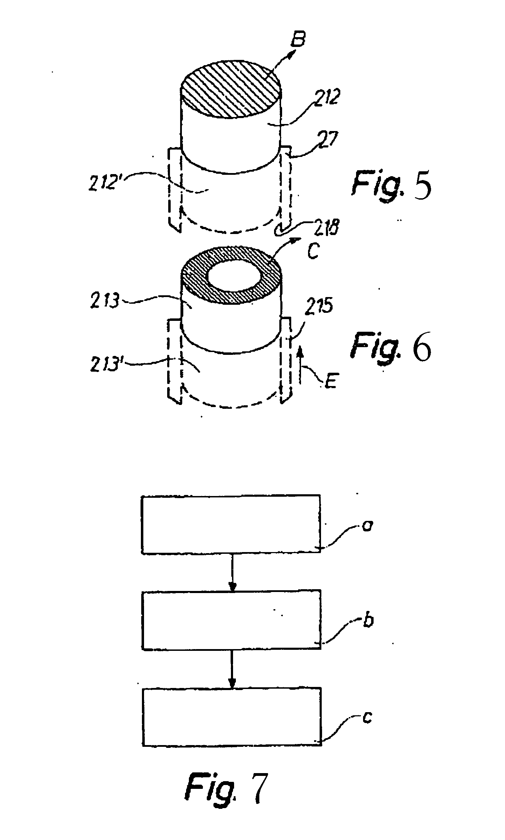

La méthode de poinçonnage selon l'invention est utilisée pour produire des éléments, tels que des éléments annulaires, par poinçonnage, et elle emploie un matériau de départ en forme de bande de matériau fibreux enduit, comme de la laine minérale trempée, de la laine de roche ou de la laine de verre. L'objet de la méthode de poinçonnage selon l'invention est de fournir les éléments fabriqués prêts à l'emploi avec la même résistance à la compression et la même souplesse que le matériau de départ. La méthode de poinçonnage met en jeu les étapes suivantes, voir la figure 7 :
a) le poinçon de perforation tubulaire 27 dépasse à travers la plaque de presse 24 et a une longueur qui correspond à 80 à 350 %, de préférence à 200 à 300 % de l'épaisseur de la bande,
b) le poinçonnage au moyen du poinçon de perforation 27 s'effectue contre une contre-plaque de pression 210 éventuellement pourvue de trous 28, et
c) le poinçonnage s'effectue d'une manière telle qu'un élément 212 qui vient d'être découpé par poinçonnage, voir la figure 5, soit initialement retenu dans le poinçon de perforation 27, mais qu'après une avance pas à pas de la bande 2 de laine minérale, et une pression renouvelée vers l'intérieur du poinçon de perforation tubulaire 27, ledit élément soit pressé vers l'arrière et l'extérieur à travers ledit poinçon de perforation au moyen de l'élément 212' à présent découpé par poinçonnage.

Les figures 5 et 6 illustrent comment les éléments 212 et 213 respectivement, initialement découpés par poinçonnage, sont sur le point d'être sortis par pressage à travers le poinçon de perforation tubulaire 27 et le poinçon de perforation tubulaire 215, respectivement, et éloignés dudit poinçon de perforation, voir la flèche B et la flèche C, respectivement, une fois que le poinçon de perforation 27 et le poinçon de perforation 215, respectivement, ont à nouveau été pressés vers le bas dans la bande 22, les poinçons de perforation 27 et 215 étant seulement indiqués au moyen d'une ligne en pointillés dans les figures 5 et 6. Le dernier poinçonnage résulte en la formation des éléments 212' et 213', respectivement, et ces éléments pressent les éléments 212 et 213, respectivement, résultant du poinçonnage précédent, à travers les poinçons de perforation tubulaires respectifs 27 et 215. Lorsqu'ils sont empilés ou juxtaposés, les éléments annulaires produits 213, 213' peuvent par exemple être utilisés comme gaines d'isolation thermique pour des tuyaux.

Il convient de noter, en rapport avec le mode de réalisation illustré dans la figure 3, que le poinçon de perforation 216 est initialement pressé vers l'intérieur, à savoir vers une deuxième contre-plaque de pression 219. Cette contre-plaque de pression 219 est placée dans une position avancée, mais immédiatement après le pressage ci-dessus, la contre-plaque de pression 219 est ramenée dans une position rétractée, voir la flèche F à deux sens, après quoi le poinçon de perforation 215 est pressé dans la bande. Lorsque les deux poinçons de perforation ont été écartés l'un de l'autre et que la bande a été avancée d'un pas, les deux poinçons de perforation 216 et 217 peuvent à nouveau être pressés dans ladite bande. L'élément annulaire 213' maintenant découpé par poinçonnage presse l'élément annulaire 213 découpé par poinçonnage au cours de l'étape précédente vers le haut (voir la flèche E) et vers l'extérieur (voir la flèche C) du poinçon tubulaire 27 de grand diamètre, ce dernier élément annulaire 213 étant libéré vers l'arrière du poinçon de perforation 27.

Selon une étape particulière de la méthode de poinçonnage, les poinçons de perforation 215 et 216 tournent tandis qu'ils sont pressés dans la bande 22.

Les éléments annulaires 213 expulsés du grand poinçon de perforation tubulaire 15 peuvent être recueillis immédiatement après leur libération.

Dans le cadre de la méthode de poinçonnage selon l'invention, le matériau de départ utilisé peut être constitué de fibres enduites de laine de verre, de laine de roche ou de fibres végétales, d'une densité de 15 à 80 kg/m³, de préférence de 35 kg/m³. La bande peut avoir une épaisseur de 4 à 20 cm, de préférence de 5 à 15 cm, en particulier d'approximativement 10 cm.

## Revendications

1. Méthode de production d'éléments (212, 212', 213, 213'), tels que des éléments annulaires, par poinçonnage, le matériau de départ étant une bande (22) de matériau fibreux enduit, tel qu'une laine minérale trempée, ladite méthode employant un outil de poinçonnage en forme d'au moins un poinçon de perforation (27, 215, 216) qui est monté dans une plaque de presse (24) et qui est pressé à travers la bande (22) puis retiré à nouveau, **caractérisée en ce que** le poinçon de perforation tubulaire (27, 215, 216) utilisé dépasse à travers la plaque de presse (24) et a une longueur (x) qui correspond à 80 à 350 %, de préférence à 200 à 300 % de l'épaisseur (t) de la bande, et **en ce que** le poinçonnage est effectué contre une contre-plaque de pression (210) éventuellement pourvue de trous (28), et **en ce que** le poinçonnage est effectué de telle sorte qu'initialement, un élément (212, 213) qui vient d'être découpé par poinçonnage soit temporairement retenu dans le poinçon de perforation (27, 215), mais qu'après une avance pas à pas de la bande (22) de matériau fibreux, tel que de la laine minérale, et une pression renouvelée vers l'intérieur du poinçon de perforation tubulaire, ledit élément soit pressé vers l'arrière à travers ledit poinçon de perforation au moyen de l'élément (212', 213') à présent découpé par poinçonnage.

2. Méthode selon la revendication précédente, dans laquelle les éléments sont par exemple utilisés comme gaines d'isolation thermique pour tuyaux, **caractérisée en ce que** les poinçons de perforation utilisés sont formés par un poinçon de perforation tubulaire (215) de grand diamètre et un poinçon de perforation tubulaire (216) de petit diamètre, lesdits poinçons de perforation tubulaires étant agencés sur leur côté respectif de la bande (22) de laine minérale, et **en ce que** les poinçons de perforation, individuellement, sont pressés dans la bande (22) et l'un dans l'autre avec pour résultat qu'un élément annulaire (213) formé entre lesdits poinçons de perforation se place comme un bouchon dans le poinçon de perforation tubulaire (215) de grand diamètre, et qu'une fois que les deux poinçons de perforation ont été écartés l'un de l'autre, la bande (22) de laine minérale est avancée d'un pas, et les deux poinçons de perforation tubulaires sont à nouveau, individuellement, pressés dans ladite bande de laine minérale avec pour résultat que l'élément annulaire (213') à présent découpé par poinçonnage presse l'élément annulaire (213) découpé par poinçonnage au cours de l'étape précédente hors du poinçon de perforation tubulaire (215) de grand diamètre, ce dernier élément annulaire (213) étant libéré vers l'arrière depuis ce dernier poinçon de perforation (215).

3. Méthode selon la revendication précédente, **caractérisée en ce que** le bouchon de fibres de laine minérale résultant de la pression vers l'intérieur dans la bande (22) au niveau du petit poinçon de perforation tubulaire (216) est aspiré vers l'arrière au moyen d'un dispositif d'aspiration (218) pour ressortir à travers le poinçon de perforation (216).

4. Méthode selon l'une des deux revendications précédentes, **caractérisée en ce que** les poinçons de perforation (27, 215, 216) utilisés tournent alors qu'ils sont pressés dans la bande (22).

5. Méthode selon l'une des revendications de méthode précédentes, **caractérisée en ce que** les éléments annulaires (213) expulsés du grand poinçon de perforation tubulaire sont recueillis immédiatement après leur libération.

6. Méthode selon l'une des revendications de méthode précédentes, **caractérisée en ce que** le matériau de départ utilisé se compose de fibres tissées de laine de verre, de laine de roche ou de fibres végétales d'une densité de 15 à 80 kg/m³, et **en ce que** la bande (22) a une épaisseur (t) de 4 à 20 cm, de préférence de 5 à 15 cm, en particulier d'approximativement 10 cm.

7. Appareil pour mettre en oeuvre la méthode selon l'une des revendications de méthode précédentes, et comprenant un dispositif (21) pour faire avancer pas à pas une bande (22) de matériau fibreux, tel que de la laine minérale ou des fibres végétales, lesdites fibres s'étendant dans la direction longitudinale (A) de la bande, ainsi qu'une plaque de presse (24) pourvue d'au moins un poinçon de perforation (27, 215), **caractérisé en ce que** le poinçon de perforation (27, 215) est tubulaire et a une longueur (x) qui correspond à 80 à 500 %, de préférence à 100 à 350 %, en particulier à 200 à 300 % de l'épaisseur (t) de la bande, et **en ce qu'**une contre-plaque de pression (210) éventuellement pourvue d'un trou (28) est agencée en face et à une certaine distance de la plaque de presse (24), et **en ce que** le poinçon de perforation (27, 215) est monté dans un trou (25) dans ladite plaque de presse (24) de manière à garantir que l'expulsion par pressage de l'élément annulaire (213) découpé par poinçonnage puisse s'effectuer vers l'arrière à travers le canal intérieur (218) du poinçon de perforation (215).

8. Appareil selon la revendication précédente, **caractérisé en ce que** les poinçons de perforation comprennent un poinçon de perforation tubulaire (15) de grand diamètre et un poinçon de perforation tubulaire (16) de petit diamètre, lesdits poinçons de perforation étant agencés directement en face l'un de l'autre sur leur côté respectif de la bande (2) de matériau fibreux enduit, de telle sorte que le poinçon de perforation (16) de petit diamètre puisse être pressé contre une contre-plaque de pression (19) qui est enlevée après que le poinçon de perforation est passé à travers la bande, et le poinçon de perforation (15) de grand diamètre puisse glisser par-dessus le poinçon de perforation (16) de petit diamètre, de préférence substantiellement coaxialement audit poinçon de perforation.

9. Appareil selon la revendication précédente, **caractérisé en ce que** le poinçon de perforation tubulaire (16) de petit diamètre est associé à un dispositif d'aspiration (18).

10. Appareil selon l'une des deux revendications précédentes, **caractérisé en ce que** le poinçon de perforation tubulaire (16) de petit diamètre a une longueur (y) qui correspond à 80 à 150 %, de préférence à 100 à 120 % de l'épaisseur (t) de la bande.

## Claims

1. Method of producing elements (212, 212', 213, 213'), such as annular elements, by way of punching, where the starting material is a web (22) of bonded fibrous material, such as tempered mineral wool, where the said method employs a punching tool in the form of at least one punch knife (27, 215, 216) which is mounted in a press plate (24) and is pressed through the web (22) then pulled out again, **characterized in that** the tubular punch knife (27, 215, 216) used projects through the press plate (24) and is of a length (x) which is 80 to 350%, preferably 200 to 300%, of the thickness (t) of the web, and **in that** the punching is carried out against a back-pressure plate (210) optionally provided with holes (28), and **in that** the punching is carried out such that initially an element (212, 213) just punched out is temporarily retained in the punch knife (27, 215), but after a stepwise advancing of the web (22) of fibrous material, such as mineral wool, and a renewed pressing inwards of the tubular punch knife, the said element is pressed backwards through the said punch knife by means of the element (212', 213') now punched out.

2. Method according to the preceding claim, in which the elements are for instance used as heat-insulating casings for pipes, **characterized in that** the punch knives used are formed by a tubular punch knife (215) of large diameter and a tubular punch knife (216) of small diameter, the said tubular punch knives being arranged on their respective sides of the web (22) of mineral wool, and **in that** individually the punch knives are pressed into the web (22) and into one another with the result that an annular element (213) formed between the said punch knives settles as a plug in the large-diameter tubular punch knife (215) and that once the two punch knives have been pulled apart the web (22) of mineral wool is advanced one step, and the two tubular punch knives are again individually pressed into the said web of mineral wool with the result that the annular element (213') now punched out presses the annular element (213) punched out during the previous step out of the large-diameter tubular punch knife (215), the said latter annular element (213) being rearwardly released from the latter punch knife (215).

3. Method according to the preceding claim, **characterized in that** the plug of mineral wool fibres resulting from the pressing inwards into the web (22) at the small tubular punch knife (216) is sucked rearwardly out through the punch knife (216) by means of a suction device (218).

4. Method according to one of the two preceding claims, **characterized in that** the punch knives (27, 215, 216) used rotate while being pressed into the web (22).

5. Method according to one of the preceding method claims, **characterized in that** the annular elements (213) expelled from the large tubular punch knife are collected immediately after their release.

6. Method according to one of the preceding method claims, **characterized in that** the starting material used is made of woven fibres of glass wool, rock wool or plant fibres with a density of 15 to 80 kg/m³, and **in that** the web (22) has a thickness (t) of 4 to 20 cm, preferably 5 to 15 cm, especially approximately 10 cm.

7. Apparatus for carrying out the method according to one of the preceding method claims, and which comprises a device (21) for stepwise advancing of a web (22) of fibrous material, such as mineral wool or plant fibres, where the said fibres extend in the longitudinal direction (A) of the web, as well as a press plate (24) provided with at least one punch knife (27, 25), **characterized in that** the punch knife (27, 215) is tubular and of a length (x) which is 80 to 500%, preferably 100 to 350%, especially 200 to 300% of the thickness (t) of the web, and **in that** a back-pressure plate (210) optionally provided with a hole (28) is arranged opposite and at a distance from the press plate (24), and **in that** the punch knife (27, 215) is mounted in a hole (25) in the said press plate (24) so as to ensure that the pressing outwards of the annular element (213) punched out can take place rearwardly through the inner channel (218) of the punch knife (215).

8. Apparatus according to the preceding claim, **characterized in that** the punch knives comprise a tubular punch knife (15) of large diameter and a tubular punch knife (16) of small diameter, the said punch knives being arranged directly opposite one another on their respective sides of the web (22) of bonded fibrous material in such a manner that the small-diameter punch knife (16) can be pressed against a back-pressure plate (19) which is removed after the punch knife has passed through the web, and the large-diameter punch knife (15) may slide over the punch knife (16), preferably substantially coaxially -to the said punch knife.

9. Apparatus according to the previous claim, **characterized in that** the small-diameter tubular punch knife (16) is associated with a suction device (18).

10. Apparatus according to one of the two preceding claims, **characterized in that** the small-diameter tubular punch knife (16) is of a length (y) which is 80 to 150%, preferably 100 to 120% of the thickness (t) of the web.

## Patentansprüche

1. Verfahren zur Herstellung von Elementen (212, 212', 213, 213') wie Ringelementen durch Stanzen, wobei das Ausgangsmaterial ein Band (22) aus einem beschichteten Fasermaterial wie einer getauchten Mineralwolle ist und in dem Verfahren ein Stanzwerkzeug in Form mindestens eines Lochstempels (27, 215, 216) verwendet wird, der in einer Pressplatte (24) angebracht ist, durch das Band (22) gedrückt und anschließend wieder zurückgezogen wird, **dadurch gekennzeichnet, dass** der verwendete röhrenförmige Lochstempel (27, 215, 216) durch die Pressplatte (24) hindurch vorsteht und eine Länge (x) hat, die 80 bis 350 % und vorzugsweise 200 bis 300 % der Dicke (t) des Bandes entspricht, **dass** das Stanzen gegen eine gegebenenfalls mit Löchern (28) versehene Gegenpressplatte (210) durchgeführt wird, **und dass** das Stanzen derart durchgeführt wird, dass zunächst ein Element (212, 213), das durch Stanzen zugeschnitten worden ist, in dem Lochstempel (27, 215) vorübergehend festgehalten wird, aber nach schrittweiser Vorwärtsbewegung des Bandes (22) aus einem Fasermaterial wie Mineralwolle und erneutem Druck zum Inneren des röhrenförmigen Lochstempels das Element durch den Lochstempel hindurch mittels des jetzt durch Stanzen zugeschnittenen Elements (212', 213') nach hinten gedrückt wird.

2. Verfahren nach dem vorhergehenden Anspruch, in welchem die Elemente beispielsweise als Wärmedämmhüllen für Rohre verwendet werden, **dadurch gekennzeichnet, dass** die verwendeten Lochstempel von einem röhrenförmigen Lochstempel (215) mit größerem Durchmesser und einem röhrenförmigen Lochstempel (216) mit kleinerem Durchmesser gebildet werden, wobei die röhrenförmigen Lochstempel auf ihrer jeweiligen Seite des Bandes (22) aus Mineralwolle angeordnet sind, **dass** die Lochstempel einzeln in das Band (22) und ineinander mit dem Ergebnis gedrückt werden, dass ein zwischen diesen Lochstempeln gebildetes Ringelement (213) sich wie ein Stopfen in dem röhrenförmigen Lochstempel (215) mit dem größeren Durchmesser befindet, und **dass,** nachdem die zwei Lochstempel voneinander beabstandet worden sind, das Band (22) aus Mineralwolle mit einem Schritt vorwärts bewegt wird und die zwei röhrenförmigen Lochstempel erneut einzeln in das Mineralwolleband mit dem Ergebnis gedrückt werden, dass das jetzt durch Stanzen zugeschnittene Ringelement (213') das Ringelement (213), das in der vorhergehenden Stufe durch Stanzen zugeschnitten worden ist, aus dem röhrenförmigen Lochstempel (215) mit dem größeren Durchmesser hinausdrückt, wobei das Ringelement (213) von letzterem Lochstempel (215) nach hinten abgegeben wird.

3. Verfahren nach dem vorhergehenden Anspruch, **dadurch gekennzeichnet, dass** der Stopfen aus Mineralwollefasern, der sich durch den Druck nach Innen in dem Band (22) an dem kleineren röhrenförmigen Lochstempel (216) bildet, mittels einer Saugeinrichtung (218) nach hinten gesaugt wird, um durch den Lochstempel (216) hindurch auszutreten.

4. Verfahren nach einem der zwei vorhergehenden Ansprüche, **dadurch gekennzeichnet, dass** sich die verwendeten Lochstempel (27, 215, 216) drehen, während sie in das Band (22) gedrückt werden.

5. Verfahren nach einem der vorhergehenden Verfahrensansprüche, **dadurch gekennzeichnet, dass** die aus dem größeren röhrenförmigen Lochstempel ausgestoßenen Ringelemente (213) sofort nach ihrer Abgabe aufgenommen werden.

6. Verfahren nach einem der vorhergehenden Verfahrensansprüche, **dadurch gekennzeichnet, dass** das verwendete Ausgangsmaterial sich aus verwebten Fasern aus Glaswolle, Gesteinswolle oder Pflanzenfasern mit einer Dichte von 15 bis 80 kg/m³ zusammensetzt, **und dass** das Band (22) eine Dicke (t) von 4 bis 20 cm, vorzugsweise 5 bis 15 cm, und insbesondere etwa 10 cm hat.

7. Vorrichtung zur Durchführung des Verfahrens nach einem der vorhergehenden Verfahrensansprüche, die eine Einrichtung (21), um ein Band (22) aus einem Fasermaterial wie Mineralwolle oder Pflanzenfasern, wobei diese Fasern in Längsrichtung (A) des Bandes verlaufen, schrittweise vorwärts zu bewegen, sowie eine Pressplatte (24), die mit mindestens einem Lochstempel (27, 215) versehen ist, umfasst, **dadurch gekennzeichnet, dass** der Lochstempel (27, 215) röhrenförmig ist und eine Länge (x) hat, die 80 bis 500 %, vorzugsweise 100 bis 350 %, und insbesondere 200 bis 300 % der Dicke (t) des Bandes entspricht, **dass** eine gegebenenfalls mit einem Loch (28) versehene Gegenpressplatte (210) gegenüber und mit einem gewissen Abstand zu der Pressplatte (24) angeordnet ist, **und dass** der Lochstempel (27, 215) in einem Loch (25) in der Pressplatte (24) derart angebracht ist, dass sichergestellt wird, dass das Ausstoßen durch Drücken des durch Stanzen zugeschnittenen Ringelements (213) durch den Innenkanal (218) des Lochstempels (215) hindurch nach hinten erfolgen kann.

8. Vorrichtung nach dem vorhergehenden Anspruch, **dadurch gekennzeichnet, dass** die Lochstempel einen röhrenförmigen Lochstempel (15) mit größerem Durchmesser und einen röhrenförmigen Lochstempel (16) mit kleinerem Durchmesser umfassen, wobei die Lochstempel direkt einander gegenüber auf ihrer jeweiligen Seite des Bandes (2) aus beschichtetem Fasermaterial derart angeordnet sind, dass der Lochstempel (16) mit kleinerem Durchmesser an eine Gegenpressplatte (19) gedrückt werden kann, die entfernt wird, nachdem der Lochstempel das Band durchstoßen hat, und der Lochstempel (15) mit größerem Durchmesser über den Lochstempel (16) mit kleinerem Durchmesser, vorzugsweise im Wesentlichen koaxial zu diesem Lochstempel, gleiten kann.

9. Vorrichtung nach dem vorhergehenden Anspruch, **dadurch gekennzeichnet, dass** der röhrenförmige Lochstempel (16) mit kleinerem Durchmesser mit einer Saugeinrichtung (18) verbunden ist.

10. Vorrichtung nach einem der zwei vorhergehenden Ansprüche, **dadurch gekennzeichnet, dass** der röhrenförmige Lochstempel (16) mit kleinerem Durchmesser eine Länge (y) hat, die 80 bis 150 % und vorzugsweise 100 bis 120 % der Dicke (t) des Bandes entspricht.
